# EUROPÄISCHE PATENTSCHRIFT

(11) **EP 1 871 549 B1**
(45) Veröffentlichungstag und Bekanntmachung des Hinweises auf die Patenterteilung: **17.09.2008**
(21) Anmeldenummer: 07711779.4
(22) Anmeldetag: 05.03.2007
(51) Int. Cl.: B21B 31/07, B21B 31/08

(54) **ABZIEHVORRICHTUNG**
EXTRACTOR
DISPOSITIF D'EXTRACTION

(30) Priorität: 24.04.2006 DE 102006019448
(43) Veröffentlichungstag der Anmeldung: 02.01.2008
(73) Patentinhaber: SMS Demag AG, 40237 Düsseldorf (DE)
(72) Erfinder: KELLER, Karl, 57271 Hilchenbach (DE); ROEINGH, Konrad, 57271 Hilchenbach (DE); SCHEFFE, Kurt, 57271 Hilchenbach (DE)
(74) Vertreter: Klüppel, Walter
(86) Internationale Anmeldenummer: PCT/EP2007/001868
(87) Internationale Veröffentlichungsnummer: WO 2007/121806

(56) Entgegenhaltungen:
- EP-A- 1 609 542
- EP-A2- 1 213 061
- DE-A1- 2 035 698
- DE-A1- 10 335 527
- DE-A1- 19 945 070
- US-A- 4 352 229

## Beschreibung

Die Erfindung betrifft eine Vorrichtung zum Abziehen der Zapfenbuchse, der Lagerbuchse und des Einbaustückes vom konisch ausgebildeten Bereich des Walzenzapfens einer Walze gemäß dem oberbegriff des Anspuchs 1 (sieche z.B, DE-A-2035698).

Vorrichtungen zum Abziehen einer aus einem Einbaustück mit einem darin angeordneten Walzenzapfenlager bestehenden Lagereinheit vom Walzzapfen der Stützwalze eines Walzgerüstes sind durch die DE 103 35 527 A1 bekannt geworden. Hier wird eine Abziehvorrichtung mit der Lagereinheit verbunden. Durch Ausübung eines Drucks zwischen Walzenzapfen und Lagereinheit wird diese axial zur Walze abgezogen. Im Zuge des Abziehvorgangs stützt sich die Lagereinheit an Bunde der Lagerbuchse ab, welche von der Lagereinheit mitgenommen wird. Nach einem weiteren Weg greift die Lagerbuchse an Bunde der Zapfenbuchse an und zieht diese vom Walzenzapfen ab.

Bei diesem Abziehvorgang addieren sich mehrere Todhübe, so dass die Abzieheinheit einen großen Weg zurücklegen muss, um die Zapfenbuchse vom Walzenzapfen abziehen zu können. Dadurch baut die Abzieheinheit sehr lang, so dass für diese Abzieheinheit entsprechend Platz gelassen werden muss, wodurch letztendlich größere Räumlichkeiten für das Abziehen der Zapfenbuchse nebst Lagereinbaustück benötigt werden. Hinzu kommt, dass wegen verhältnismäßig kleiner Kolbenflächen der Abzieheinheit große Drücke aufgebracht werden müssen, um die Abzieheinheit betätigen zu können.

Der Erfindung liegt die Aufgabe zugrunde, eine Abziehvorrichtung aufzuzeigen, die sehr kurz baut und bei der die Abziehbewegung schon mit kleinen Drücken erreicht wird.

Zur Lösung dieser Aufgabe wird vorgeschlagen, dass zum Abziehen der Zapfenbuchse und des Einbaustückes in dem Spalt ein mechamithes Druckmittel vorgesehen ist und/oder mittel zum Einbringen eines fluiden und/oder gasförmigem Druchmittels in den system vorgeselen sind

Dadurch, dass der Druckschulterring direkt mit der Zapfenbuchse verbunden ist müssen keine Wege und Todhübe überwunden werden, bis die Abziehkraft auf die Zapfenbuchse einwirkt. Hinzu kommt, dass die Stirnseite des Walzenzapfens mit ihrer großen Fläche dem ebenfalls großflächigen Druckschulterring gegenübersteht. Durch die großen Fläche reichen bereits kleine Drücke der Druckmittel, um die Zapfenbuchse vom Walzenzapfen abzuziehen.

Es hat sich bewährt, den Druckschulterring gegenüber dem Walzenzapfenansatz über mindestens eine Dichtungsvorrichtung abzudichten. Damit ist sichergestellt, dass nicht zu viel vom Druckmittel verloren geht und der benötigte Druck sicher aufgebaut werden kann.

Wird zwischen dem Druckschulterring und der Stirnfläche der Lagerbuchse ebenfalls mindestens ein Dichtungselement vorgesehen, so wird der Druckraum noch dichter. Die Pumpe zum Aufbringen des Drucks braucht dadurch weniger Leistung zu erbringen.

Vor Vorteil ist, wenn im Walzenzapfenansatz mindestens eine Bohrung vorgesehen ist, über welche der Spalt zwischen der Stirnseite des Walzenzapfens und dem Druckschulterring mit fluiden und/or gasförmigen Druckmittel versorgbar ist. Dadurch ist eine einfache Möglichkeit gegeben, von außen an den Spalt zwischen Stirnfläche des Walzenzapfens und Druckschulterring zu kommen.

Nachahmenswert ist, dass die Bohrung am freien Ende des Walzenzapfenansatzes einen Anschluss, vorzugsweise eine Schnell- Kupplung, für den Anschluss einer Druckleitung aufweist. Damit lässt sich auf einfache Weise eine Verbindung vom Druckmittelbehälter zum Druckraum zwischen Walzenstirnseite und dem Druckschulterring herstellen.

Ein besonderer Vorzug ergibt sich dadurch, dass als fluides Druckmittel das zur Schmierung des Radiallagers dienende Lageröl Verwendung findet. Dadurch ist gewährleistet, dass eine Vermischung des als Druckmittel dienenden Öls und des aus dem Ölflutlager austretenden Öls unproblematisch ist.

Von Vorteil ist es, wenn es sich bei dem mechamischem Druchmittel um mindestens eine, beim Aufziehen der Zapfenbuchse vorgespannte Feder handelt. Sowie der Druckschulterring für den Abziehvorgang in axialer Richtung freigegeben wird kann die vorgespannte Feder den Druckschulterring in axialer Richtung bewegen. Dadurch, dass der Druckschulterring direkt an der Zapfenbuchse angreift wird diese, ohne dass die Federn große Entspannwege zurücklegen müssen vom Walzenzapfen abgezogen.

In vorteilhafter Weise kann es sich bei der Feder um eine ringförmige Feder oder aber um eine Schraubenfeder handeln. Die Federn sollten jedoch, damit es zu keinen ungewollten Verschiebungen derselben kommen kann, in Nuten bzw. Ausnehmungen in der Stirnseite das Walzenzapfen und/oder in der, der Stirnseite des Walzenzapfens gegenüberliegenden Stirnseite des Druckschulterringes angeordnet sein.

Die Erfindung wird anhand einer Zeichnung näher erläutert. Dabei zeigt
- Fig.1: eine mit fluidem Druckmittel arbeitende Abziehvorrichtung, und
- Fig. 2: eine mit Federkraft arbeitende Abziehvorrichtung.

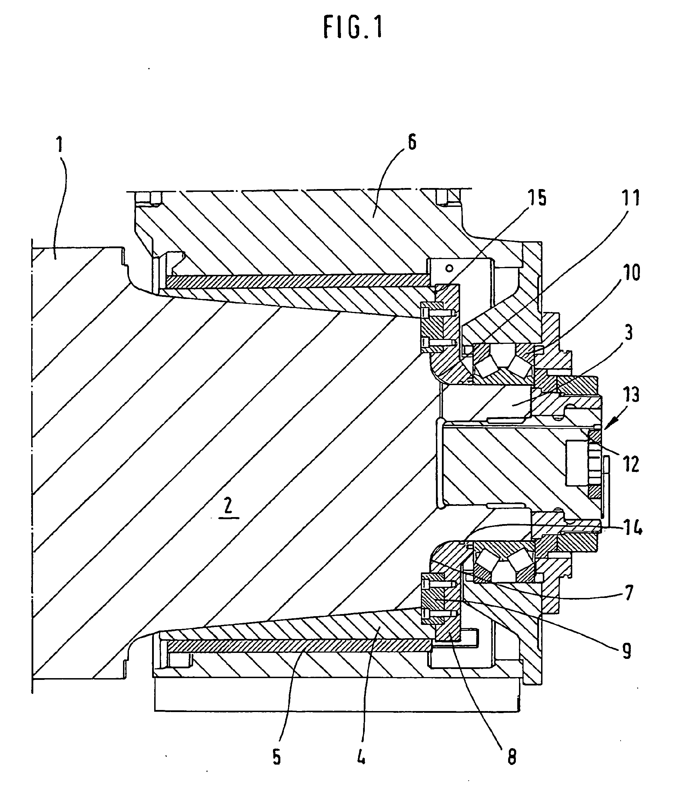

Die Figur 1 zeigt eine Walze 1, die einen Walzenzapfen 2 aufweist. An dem Walzenzapfen 2 ist ein Walzenzapfenansatz 3 angeordnet. Auf den Walzenzapfen 2 ist die Zapfenbuchse 4 aufgezogen, welche von der Lagerbuchse 5 umgeben ist. Die Lagerbuchse 5 ist vom Einbaustück 6 gehalten. Der Stirnseite 7 des Walzenzapfens 2 gegenüberliegend ist ein Druckschulterring 8 angeordnet, welcher auf dem Walzenzapfenansatz 3 axial verschiebbar, über eine Dichtungsvorrichtung 14 gedichtet gelagert ist. Der Druckschulterring 8 ist mit der Zapfenbuchse 4 verbunden. Auch zwischen dem Druckschulterring 8 und der Zapfenbuchse 4 ist ein Dichtungselement 15 vorgesehen. Der Druckschulterring 8 weist eine Paßfeder 9 auf, der eine relative Drehbewegung zwischen Walzenzapfen 2 und Druckschulterring 8 verhindert. Weiterhin ist ein Axiallager 10 gezeigt, welches sich auf dem Walzenzapfenansatz 3 abstützt und mit dem Einbaustück 6 verbunden ist.

Zwischen der Stirnseite des Walzenzapfens 2 und der dieser zugewandten Seite des Druckschulterrings 8 ist ein Spalt 11 vorgesehen. Eine Bohrung 12 im Walzenzapfenansatz 3 stellt eine Verbindung von außen zum Spalt 11 her. Am freien Ende des Walzenzapfenansatzes 3 weits die Bohrung 12 eine Kupplung 13 zum Anschluss der Bohrung 12 an eine nicht gezeigte Druckmittelleitung auf.

Wird über die Bohrung 12 Druckmittel in den Spalt 11 gebracht, so bewegt sich der Druckschulterring 8 in der Figur nach rechts, wobei die mit dem Druckschulterring 8 verbundene Zapfenbuchse 4 vom Walzenzapfen 2 abgezogen wird.

Der Druckschulterring 8 bewegt weiterhin über das Axiallager 10 das Einbaustück 6 mit dessen Lagerbuchse 5 im Bild nach rechts. Damit wird erreicht, dass Todhübe vermieden werden, so dass nur ein sehr kurzer Hub ausreicht, um die Zapfenbuchse 4 und das Einbaustück 6 mit der Lagerbuchse 5 vom Walzenzapfen 2 zu lösen. Damit baut die ganze Abziehvorrichtung sehr kurz.

Durch die große vom Druckmittel beaufschlagte Fläche reichen kleine Drücke aus, um die Zapfenbuchse 4 vom Walzenzapfen 2 zu lösen. Hinzu kommt, dass sich durch den direkten Angriff des Druckschulterrings an der Zapfenbuchse 4 und der annähernd direkte Angriff an das Einbaustück 6 kostenaufwendig herzustellende Mitnahmeschultern sowohl an der Zapfenbuchse 4 als auch an der Lagerbuchse 5 erübrigen.

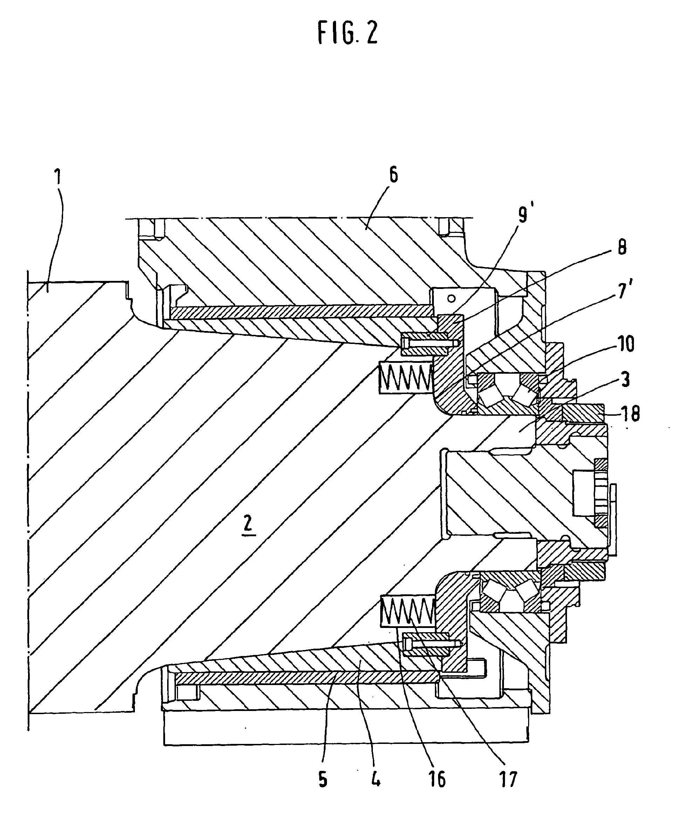

Figur 2 zeigt ebenfalls die Walze 1, die den Walzenzapfen 2 aufweist. An dem Walzenzapfen 2 ist der Walzenzapfenansatz 3 angeordnet. Auf den Walzenzapfen 2 ist die Zapfenbuchse 4 aufgezogen, welche von der Lagerbuchse 5 umgeben ist. Die Lagerbuchse 5 ist vom Einbaustück 6 gehalten. In der Stirnseite 7' des Walzenzapfens 2 sind Ausnehmungen 16 vorgesehen, in denen vorgespannte Federn 17 angeordnet sind, die sich gegen den Druckschulterring 8 abstützen. Wird die Mutter 18 vom Walzenzapfenansatz 3 gelöst, so können die Federn 17 den Druckschulterring 8 axial in Figur 2 nach rechts bewegen. Dabei wird die Zapfenbuche 4 vom Walzenzapfen 2 abgezogen

Der Druckschulterring 8 bewegt weiterhin über das Axiallager 10 das Einbaustück 6 mit dessen Lagerbuchse 5 im Bild nach rechts. Damit wird erreicht, dass Todhübe vermieden werden, so dass nur ein sehr kurzer Hub ausreicht, um die Zapfenbuchse 4 und das Einbaustück 6 mit der Lagerbuchse 5 vom Walzenzapfen 2 zu lösen. Damit baut die ganze Abziehvorrichtung sehr kurz.

### Bezugszeichenübersicht

- 1: Walze
- 2: Walzenzapfen
- 3: Walzenzapfenansatz
- 4: Zapfenbuchse
- 5: Lagerbuchse
- 6: Einbaustück
- 7: Stirnseite
- 8: Druckschulterring
- 9: Paßfeder
- 10: Axiallager
- 11: Spalt
- 12: Bohrung
- 13: Kupplung
- 14: Dichtungsvorrichtung
- 15: Dichtungselement
- 16: Ausnehmungen
- 17: Federn
- 18: Mutter

## Patentansprüche

1. Vorrichtung zum Abziehen der Zapfenbuchse (4), der Lagerbuchse (5) und des Einbaustücks (6) vom konisch ausgebildeten Bereich des Walzenzapfens (2) einer Walze (1), wobei auf einem Walzenzapfenansatz (3) der Walze (1) ein Druckschulterring (8) angeordnet ist, der sich an der Stirnfläche der Zapfenbuchse (4) abstützt, wobei
zwischen dem Druckschulterring (8) und der Stirnseite (7) des Walzenzapfens (2) ein Spalt (11) vorgesehen ist, wird wobei der Druckschulterring (8) mit der Zapfenbuchse (4) gekoppelt ist, **dadurch gekennzeichnet, dass** zum Abziehen der Zapfenbuchse (4) und des Einbaustücks (6) in dem Spalt (11) mindestens ein mechanisches Druckmittel (17) vorgesehen ist und/oder Mittel zum einbringen eines fluiden und/oder gasförmigen Druchmittels in den spalt (11) vorgeschen sind.

2. Vorrichtung nach Anspruch 1,
**dadurch gekennzeichnet,**
**dass** der Druckschulterring (8) gegenüber dem Walzenzapfenansatz (3) über mindestens eine Dichtungsvorrichtung (14) abgedichtet ist.

3. Vorrichtung nach einem der Ansprüche 1 oder 2,
**dadurch gekennzeichnet,**
**dass** zwischen dem Druckschulterring (8) und der Stirnfläche der Zapfenbuchse (4) mindestens ein Dichtungselement (15) vorgesehen ist.

4. Vorrichtung nach einem der Ansprüche 1 bis 3.
**dadurch gekennzeichnet,**
**dass** im Walzenzapfenansatz (3) mindestens eine Bohrung (12) vorgesehen ist, über welche der Spalt (11) zwischen der Stirnseite (7) des Walzenzapfens (2) und dem Druckschulterring (8) mit dem fluiden und/oder gasförmigen Druckmittel versorgbar ist.

5. Vorrichtung nach Anspruch 4,
**dadurch gekennzeichnet,**
**dass** die Bohrung (12) am freien Ende des Walzenzapfenansatzes (3) einen Anschluss, vorzugsweise eine Schnell- Kupplung (13), für den Anschluss einer Druckmittelleitung aufweist.

6. Vorrichtung nach einem der Ansprüche 1 bis 5,
**dadurch gekennzeichnet,**
**dass** als fluides, Druckmittel das zur Schmierung des Radiallagers dienende Lageröl Verwendung findet.

7. Vorrichtung nach Anspruch 1,
**dadurch gekennzeichnet,**
**dass** es sich bei dem mechanishen Druckmittel (12) um mindestens eine, beim Aufziehen der Zapfenbuchse (4),bei dem mechanischen Druckmittel (17) der Lagerbuchse (5) und des Einbaustücks (6) vorgespannte Feder (17) handelt.

8. Vorrichtung nach Anspruch 7,
**dadurch gekennzeichnet,**
**dass** es sich bei der Feder um eine ringförmige Feder handelt.

9. Vorrichtung nach Anspruch 8,
**dadurch gekennzeichnet,**
**dass** die ringförmige Feder als Federpaket teilweise in einer Ringnut in der Stirnseite (7) des Walzenzapfens (2) und/oder im Druckschulterring (8) gegen Verschieben gesichert ist.

10. Vorrichtung nach Anspruch 7,
**dadurch gekennzeichnet,**
**dass** es sich bei der Feder (17) um mindesten zwei Schraubenfedern handelt, die in gleichmäßig auf der Stirnseite (7') des Walzenzapfens (2) verteilten Ausnehmungen (16) und/oder im Druckschulterring (8) gegen Verschieben gesichert sind.

## Claims

1. Device for method of drawing off the pin bush (4), the bearing bush (5) and the chock (6) from the conically formed region of the roll pin (2) of a roll (1), wherein a pressure shoulder ring (8) which is supported on the end face of the pin bush (4) is arranged on a roll pin extension (3) of the roll (1), wherein a gap (11) is provided between the pressure shoulder ring (8) and the end face (7) of the roll pin (2) and wherein the pressure shoulder ring (8) is coupled with the pin bush (4), **characterised in that** for withdrawal of the pin bush (4) and the chock (6) at least one mechanical pressure means (17) is provided in the gap (11) and/or means for introducing a fluid and/or gaseous pressure medium into the gap (11) are provided.

2. Device according to claim 1, **characterised in that** the pressure shoulder ring (8) is sealed relative to the roll pin extension (3) by way of at least one sealing device (14).

3. Device according to one of claims 1 and 2, **characterised in that** at least one sealing element (15) is provided between the pressure shoulder ring (8) and the end surface of the pin bush (4).

4. Device according to any one of claims 1 to 3, **characterised in that** at least one bore (12) by way of which the gap (11) between the end face (7) of the roll pin (2) and the pressure shoulder ring (8) can be supplied with the fluid and/or gaseous pressure medium is provided in the roll pin extension (3).

5. Device according to claim 4, **characterised in that** the bore (12) has at the free end of the roll pin extension (3) a connection, preferably a quick-action coupling (13), for connecting a pressure medium duct.

6. Device according to any one of claims 1 to 5, **characterised in that** the bearing oil serving for lubrication of the radial bearing is used as fluid pressure medium.

7. Device according to claim 1, **characterised in that** the mechanical pressure means (17) is at least one spring (17) biased during drawing on of the pin bush (4), the bearing bush (5) and the chock (6).

8. Device according to claim 7, **characterised in that** the spring is an annular spring.

9. Device according to claim 8, **characterised in that** the annular spring is, as a spring packet, partly secured in an annular groove in the end face (7) of the roll pin (2) and/or in the pressure shoulder ring (8) against displacement.

10. Device according to claim 7, **characterised in that** the spring (17) is at least two helical springs which are secured in recesses (16), which are uniformly distributed on the end face (7') of the roll pin (2), and/or in the pressure shoulder ring (8) against displacement.

## Revendications

1. Dispositif pour enlever la douille (4) de tourillon, le coussinet (5) et l'empoise (6) de la zone conique du tourillon (2) d'un cylindre (1), un anneau (8) à épaulement sous pression étant disposé sur une bride (3) de tourillon du cylindre (1), qui s'appuie sur la face frontale de la douille (4) de tourillon, une fente (11) étant prévue entre l'anneau (8) à épaulement sous pression et la face frontale (7) du tourillon (2) de cylindre et l'anneau (8) à épaulement sous pression étant couplé à la douille (4) de tourillon, **caractérisé en ce qu'**on a prévu dans la fente (11), pour enlever la douille (4) de tourillon et l'empoise (6), au moins un agent sous pression (17) mécanique et/ou des moyens pour introduire un agent sous pression fluide et/ou gazeux dans la fente (11).

2. Dispositif selon la revendication 1, **caractérisé en ce que** l'anneau (8) à épaulement sous pression est fermé par rapport à la bride (3) de tourillon de cylindre via au moins un dispositif d'étanchéité (14).

3. Dispositif selon l'une quelconque des revendications 1 ou 2, **caractérisé en ce qu'**on a prévu entre l'anneau (8) à épaulement sous pression et la face frontale de la douille (4) de tourillon au moins un élément d'étanchéité (15).

4. Dispositif selon l'une quelconque des revendications 1 à 3, **caractérisé en ce qu'**on a prévu dans la bride (3) du tourillon de cylindre au moins un orifice (12) via lequel la fente (11) entre la face frontale (7) du tourillon (2) de cylindre et l'anneau (8) à épaulement sous pression peut être alimentée en agent sous pression fluide et/ou gazeux.

5. Dispositif selon la revendication 4, **caractérisé en ce que** l'orifice (12) présente en l'extrémité libre de la bride (3) du tourillon de cylindre un raccord, de préférence un raccord rapide (13) pour le raccordement de la conduite d'agent sous pression.

6. Dispositif selon l'une quelconque des revendications 1 à 5, **caractérisé en ce qu'**on utilise comme agent sous pression fluide l'huile pour palier servant à lubrifier le palier radial.

7. Dispositif selon la revendication 1, **caractérisé en ce qu'**il s'agit, pour l'agent sous pression (17) mécanique d'au moins un ressort (17) précontraint lors de la mise en place de la douille (4) de tourillon, du coussinet (5) et de l'empoise (6).

8. Dispositif selon la revendication 7, **caractérisé en ce qu'**il s'agit, pour le ressort, un ressort annulaire.

9. Dispositif selon la revendication 8, **caractérisé en ce que** le ressort annulaire, sous forme d'un bloc-ressort, est assuré contre un déplacement partiellement dans une rainure annulaire dans la face frontale (7) du tourillon (2) de cylindre ou/ou dans l'anneau (8) à épaulement sous pression.

10. Dispositif selon la revendication 7, **caractérisé en ce qu'**il s'agit, pour le ressort (17), d'au moins deux ressorts à vis qui sont assurés contre un déplacement dans des évidements (16) répartis régulièrement sur la face frontale (7') du tourillon (2) du cylindre et/ou dans l'anneau à épaulement sous pression (8).
